Europäisches Patentamt

European Patent Office

Office européen des brevets

(11) Veröffentlichungsnummer: **0 191 959**
**B1**

(12) ## EUROPÄISCHE PATENTSCHRIFT

(45) Veröffentlichungstag der Patentschrift:
25.01.89

(51) Int. Cl.⁴: **B 01 D 46/30**

(21) Anmeldenummer: 85202125.2

(22) Anmeldetag: 20.12.85

(54) Verfahren und Vorrichtung zum Abreinigen staubbeladener Granulatfilter.

(30) Priorität: 22.01.85 DE 3501930

(43) Veröffentlichungstag der Anmeldung:
27.08.86 Patentblatt 86/35

(45) Bekanntmachung des Hinweises auf die Patenterteilung:
25.01.89 Patentblatt 89/4

(84) Benannte Vertragsstaaten:
DE FR GB IT

(56) Entgegenhaltungen:
DE-A-3 012 911

SOVIET INVENTIONS ILLUSTRATED, Section
Chemical, Woche D11, 22. April 1981,
Zusammenfassungsnr. 18752,D11 H04,J01, Derwent
Publications Ltd., London, GB; & SU - A - 674 270
(BASHKARDIN V. YA.) 23.10.1980

(73) Patentinhaber: METALLGESELLSCHAFT AG,
Reuterweg 14 Postfach 3724, D-6000 Frankfurt/M.1
(DE)

(72) Erfinder: Würl, Robert, Danziger Strasse 13, D-6369
Nidderau (DE)
Erfinder: Schlaffer, Herbert, Uhlandstrasse 15,
D-6092 Kelsterbach (DE)

(74) Vertreter: Rieger, Harald, Dr., Reuterweg 14,
D-6000 Frankfurt am Main (DE)

## Beschreibung

Die Erfindung betrifft ein Verfahren zum Abreinigen der staubbeladenen Filterschicht eines Granulatfilters durch über Düsenrohre auf die Filterschicht gerichtete Druckluftstöße zum Ausblasen des Staubs aus der Filterschicht, sowie eine Vorrichtung hierzu.

Granulatfilter und deren Abreinigung mittels Druckluft sind aus der US-PS-4 004 897 bekannt. In der deutschen Offenlegungsschrift 3 012 911 werden Granulatfilter beschrieben, wobei die Filterschicht durch Druckluftstöße aus Düsenrohren abgereinigt wird.

Der Erfindung liegt die Aufgabe zugrunde, die bekannten Verfahren und Vorrichtungen weiter zu verbessern und die staubbeladene Filterschicht eines Granulatfilters auf einfache und wirksame Weise abzureinigen. Beim Verfahren der eingangs genannten Art geschieht dies dadurch, daß die Düsenrohre so zwischen Strömungsleitwänden angeordnet sind, daß bei jedem Druckluftstoß, dessen Dauer höchstens 0,25 sec beträgt, mindestens die dreifache Menge an Sekundärluft, verglichen mit der Menge der Druckluft, auf die Filterschicht gerichtet wird. Die für das erfindungsgemäße Verfahren nötige Vorrichtung ist so aufgebaut, daß sich jedes Düsenrohr zwischen einem Paar Strömungsleitwänden befindet, die einen zur Filterschicht hin divergierenden Strömungsraum begrenzen, der für angesaugte Sekundärluft frei einströmbar ist.

Durch das erfindungsgemäße Verfahren und die zugehörige Vorrichtung wird die Filterschicht abschnittsweise durch jeweils eine oder wenige, mit Preßluft beaufschlagte Düsenlanze bzw. Düsenlanzen abgereinigt. Die Düsenrohre und die Strömungsleitwände befinden sich auf der Reingasseite des Granulatfilters, so daß es sich bei der angesaugten Sekundärluft um gereinigtes Gas handelt, das zuvor das Granulatfilter passiert hat.

Einzelheiten des Verfahrens und der Vorrichtung werden mit Hilfe der Zeichnung erläutert. Es zeigt:

Fig. 1   einen senkrechten Schnitt durch die schematisch dargestellte Filteranordnung (Schnittlinie I - I in Fig. 2) und

Fig. 2   einen Horizontalschnitt nach der Linie II - II der Fig. 1.

Die Filterschicht 1 des Granulatfilters besteht aus einer Granulatschüttung mit Korngrößen im Bereich von etwa 2 bis 5 mm. Das Filtermaterial besteht z. B. aus Quarz, Aluminium oder Aktivkohle. Die Filterschicht 1 befindet sich zwischen gasdurchlässigen Wänden 2 und 3, wobei das Rohgas in Richtung des Pfeils 4 zunächst durch die Wand 2 strömt, dann die Filterschicht 1 durchdringt und als Reingas durch die Wand 3 abströmt. Der dabei abgeschiedene Staub wird in der Filterschicht 1 festgehalten.

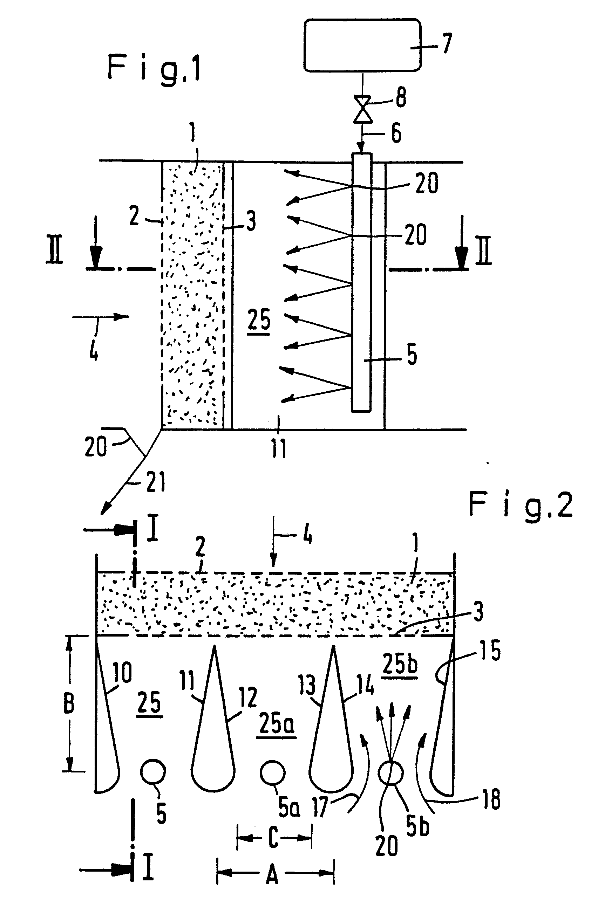

Wenn die Staubbeladung der Filterschicht 1 so groß wird, daß der Druckverlust über den erwünschten Wert steigt, wird die Schicht 1 abschnittsweise durch Ausblasen abgereinigt. Hierzu dienen senkrechte, parallele Düsenrohre 5, von denen in Fig. 2 drei Düsenrohre 5, 5a und 5b im Querschnitt zu sehen sind. Fig. 1 ist die Wiedergabe des senkrechten Schnittes entlang der Linie I - I in Fig. 2.

Die Düsenrohre 5, 5a, 5b weisen zahlreiche Austrittsdüsen 20, die zur Filterschicht 1 hin gerichtet sind, auf, vgl. vor allem Fig. 1. Die Düsenrohre 5, 5a und 5b sind über direkte Leitungen 6 mit einem Druckluftbehälter 7 verbunden. Über Membranventile 8, welche jede Leitung 6 absperren, kann jedes Düsenrohr 5, 5a oder 5b einzeln vom Behälter 7 aus mit einem Druckluftstoß beaufschlagt werden. Dieser Druckluftstoß dauert üblicherweise 0,1 bis 0,25 sec, er bewirkt das abschnittsweise Abreinigen der Filterschicht.

Ein Filterabschnitt wird gebildet durch das Düsenrohr 5, 5a oder 5b und die beiden nächstliegenden Strömungsleitwände, die in Fig. 2 dargestellt sind. Zum Düsenrohr 5 der Fig. 2 gehören die Strömungsleitwände 10 und 11, zum mittleren Düsenrohr 5a die Strömungsleitwände 12 und 13 und zum rechten Düsenrohr 5b gehören die Strömungsleitwände 14 und 15. Im Querschnitt, der in Fig. 2 zu sehen ist, haben zusammengehörige Wände 11 und 12 sowie 13 und 14 etwa die Form eines Wassertropfens bzw. eines Tragflügelprofiles. Durch Form der Wände 10 bis 15 und ihre Anordnung zwischen den Düsenrohren divergiert jeder Strömungsraum 25, 25a, 25b, in welchem sich die Rohre befinden, zur Filterschicht 1 hin. Die durch die Formgebung der Wände 10 bis 15 auf der Höhe der Rohre 5, 5a und 5b erzeugte Verengung des Strömungsraumes bewirkt ein kräftiges Ansaugen von Sekundärluft in Richtung der Pfeile 17 und 18, sobald ein Druckluftstoß aus den Düsenrohren austritt. Das Ansaugen von Sekundärluft ist so intensiv, daß ein Druckluftstoß, der aus einem Rohr 5, 5a oder 5b austritt, mindestens das Dreifache seiner Menge an Sekundärluft aus der Umgebung ansaugt und durch die Filterschicht 1 drückt. Da mit der Druckluftstoß genügend Energie besitzt, steht der Druckluftbehälter 7 unter einem Druck von üblicherweise 4 bis 6 bar.

Von Bedeutung für das optimale Funktionieren der Abreinigungsvorrichtung sind auch folgende Maße:

Die Breite A eines Abreinigungsabschnittes, vgl. Fig. 1, liegt bei etwa 10 bis 20 cm, und ebenso beträgt der Abstand B eines Düsenrohres von der gasdurchlässigen Wand 3 10 bis 20 cm. Der kürzeste Abstand C benachbarter Strömungsleitwände liegt im Bereich von 5 bis 7 cm, und die Düsenrohre 5, 5a und 5b weisen üblicherweise Durchmesser im Bereich von 2 bis 4 cm auf. Beim Abreinigen wird immer nur einem der zahlreichen Düsenrohre oder aber einer geringen Anzahl hiervon gleichzeitig ein Druckluftstoß aus dem Druckluftbehälter 7 zugeleitet, um den Staub aus dem betreffenden Abschnitt der Filterschicht 1 auszublasen. Dieser Staub wird durch die gasdurchlässige Wand 2 in den Anströmbereich des Rohgases gedrückt und fällt in einen Staubtrichter 20, zu dem eine Ableitung 21 gehört. Durch die abschnittsweise Abreinigung des Filters ist es nur in Sonderfällen notwendig, die ganze Filterschicht während der Abreinigung außer Betrieb zu schalten.

**Patentansprüche**

1. Verfahren zum Abreinigen der staubbeladenen Filterschicht eines Granulatfilters durch über Düsenrohre auf die Filterschicht gerichtete Druckluftstöße zum Ausblasen des Staubs aus der Filterschicht, dadurch gekennzeichnet, daß die Düsenrohre so zwischen Strömungsleitwänden angeordnet sind, daß bei jedem Druckluftstoß, dessen Dauer höchstens 0,25 sec beträgt, mindestens die dreifache Menge an Sekundärluft, verglichen mit der Menge der Druckluft, auf die Filterschicht gerichtet wird.

2. Verfahren nach Anspruch 1, dadurch gekennzeichnet, daß die Filterschicht abschnittsweise durch jeweils ein Düsenrohr oder wenige, mit Preßluft beaufschlagte Düsenrohre abgereinigt wird.

3. Vorrichtung zum Abreinigen der staubbeladenen Filterschicht eines Granulatfilters durch über Düsenrohre auf die Filterschicht gerichtete Druckluftstöße zum Ausblasen des Staubs aus der Filterschicht, dadurch gekennzeichnet, daß sich jedes Düsenrohr zwischen einem Paar Strömungsleitwänden befindet, die einen zur Filterschicht hin divergierenden Strömungsraum begrenzen, der für angesaugte Sekundärluft frei einströmbar ist.

4. Vorrichtung nach Anspruch 3, dadurch gekennzeichnet, daß die Strömungsleitwände im Querschnitt senkrecht zur Längserstreckung des Düsenrohres etwa Tropfenform aufweisen.

5. Vorrichtung nach Anspruch 3 oder 4, dadurch gekennzeichnet, daß sich die Düsenrohre und die Strömungsleitwände auf der Reingasseite des Granulatfilters befinden.

6. Vorrichtung nach Anspruch 3 oder einem der folgenden, dadurch gekennzeichnet, daß die Düsenrohre mit einem gemeinsamen Druckluftbehälter verbunden sind.

**Claims**

1. Process for cleaning the dust-laden filter bed of a granulate filter by jets of compressed air directed through jet pipes on to the filter bed in order to blow out the dust from the filter bed, characterised in that the jet pipes are disposed between flow guidance walls in such a way that during each jet of compressed air, the duration of which is at maximum 0.25 seconds, at least three times the quantity of secondary air, compared to the quantity of compressed air, is directed on to the filter bed.

2. Process according to Claim 1, characterised in that the filter bed is cleaned in sections by one jet pipe in each case or fewer jet pipes acted upon by compressed air.

3. Device for cleaning the dust-laden filter bed of a granulate filter by jets of compressed air directed through jet pipes on to the filter bed in order to blow out the dust from the filter bed, characterised in that each jet pipe is located between a pair of flow guidance walls which delimit a flow space diverging towards the filter bed, into which space drawn-in secondary air can flow freely.

4. Device according to Claim 3, characterised in that the flow guidance walls are approximately drop-shaped in a cross-section vertical to the longitudinal extent of the jet pipe.

5. Device according to Claim 3 or 4, characterised in that the jet pipes and the flow guidance wails are located on the pure gas side of the granulate filter.

6. Device according to Claim 3 or to one of the following claims, characterised in that the jet pipes are connected to a common compressed air container.

**Revendications**

1. Procédé de nettoyage de la couche filtrante chargée en poussière d'un filtre à granulés, par de l'air comprimé envoyé par à-coups par des tubes à tuyères sur la couche filtrante, afin d'expulser la poussière de la couche filtrante, caractérisé en ce qu'il consiste à disposer les tubes à tuyères entre des parois de guidage de l'écoulement de façon que, pour chaque à-coup d'air comprimé dont la durée est de 0,25 seconde au plus, au moins une quantité triple d'air secondaire, comparativement à la quantité d'air comprimé, soit envoyée sur la couche filtrante.

2. Procédé suivant la revendication 1, caractérisé en ce qu'il consiste à nettoyer la couche filtrante par sections par respectivement un ou quelques tubes à tuyères alimentés en air comprimé.

3. Dispositif de nettoyage de la couche filtrante chargée en poussière d'un filtre à granulés par de l'air comprimé envoyé par à-coups par des tubes à tuyères sur la couche filtrante, afin de refouler la poussière de la couche filtrante, caractérisé en ce que chaque tube à tuyères se trouve entre une paire de parois de guidage de l'écoulement qui délimitent un espace pour l'écoulement divergeant vers la couche filtrante, et dans lequel de l'air secondaire aspiré peut pénétrer librement.

4. Dispositif suivant la revendication 3, caractérisé en ce que les parois de guidage de l'écoulement ont, en section transversale, perpendiculairement à l'étendue longitudinale du tube à tuyères, sensiblement la forme d'une goutte.

5. Dispositif suivant la revendication 3 ou 4, caractérisé en ce que les tubes à tuyères et les parois de guidage de l'écoulement se trouvent du côté du gaz pur du filtre à granulés.

6. Dispositif suivant la revendication 3 ou l'une des revendications suivantes, caractérisé en ce que les tubes à tuyères communiquent avec un réservoir commun d'air comprimé.

# Fig.1

# Fig.2